# EUROPEAN PATENT SPECIFICATION

(11) **EP 3 923 099 B1**
(45) Date of publication and mention of the grant of the patent: **25.10.2023**
(21) Application number: 21176639.9
(22) Date of filing: 28.05.2021
(51) Int. Cl.: G05B 19/418, G06F 8/36, G06F 9/54, G06F 8/30

(54) **A METHOD AND AN APPARATUS FOR ENABLING ACCESS TO PROCESS DATA OF A FOOD PRODUCTION PLANT**
VERFAHREN UND VORRICHTUNG ZUR ERMÖGLICHUNG DES ZUGRIFFS AUF PROZESSDATEN EINER LEBENSMITTELPRODUKTIONSANLAGE
PROCÉDÉ ET APPAREIL PERMETTANT D'ACCÉDER AUX DONNÉES DE TRAITEMENT D'UNE USINE DE PRODUCTION ALIMENTAIRE

(30) Priority: 12.06.2020 EP 20179799
(43) Date of publication of application: 15.12.2021
(73) Proprietor: Tetra Laval Holdings & Finance S.A., 1009 Pully (CH)
(72) Inventor: Moberg, Rickard, 268 71 Teckomatorp (SE); Nygren, Sebastian, 232 34 Arlöv (SE); Abrahamsson, Mattias, 261 94 Annelöv (SE)
(74) Representative: Tetra Pak - Patent Attorneys SE

(56) References cited:
- US-A1- 2016 062 739
- US-A1- 2017 192 407
- US-A1- 2020 125 076

## Description

### Technical Field

The invention relates to software technology within the food processing industry. More particularly, it is related to methods and apparatuses for enabling access to process data of a food production plant.

### Background Art

Today, within the food production industry, systems, such as supervisory control and data acquisition (SCADA) systems, are often used to control the equipment of the food production plant. For a SCADA system to run and control the plant, it is dependent on data describing all equipment and their corresponding properties. For instance, for a tank, properties such as volume, inlets, outlets and valves connected to these are often needed to use the SCADA systems.

Many plants rely on the same type of equipment but with different setups and with customizations specific to a single plant. Because of these differences, a data model representing the plant is required to be customized for each plant which in turn yields high engineering costs. This engineering costs also increase due to that there are several different types of control systems resulting in that control system adaptations often are necessary.

The general solution to this problem today is to make database models that reflect the customizations needed for a specific installation. The engineer would then write scripts to retrieve this data targeting a unique database scheme. This process is however time consuming and also increases the risk of bugs being introduced.

US2016/062739 A1 discloses systems and methods for service extraction and application composition based on requirement information for a service-oriented application. In particular, US2016/062739A1 discloses a method for enabling access to legacy software said method comprising receiving, by a central server, properties of the legacy software, generating a data model based on the properties, said data model comprising data model properties, transmitting the data model properties to an application programming interface (API) tool, receiving adapted data model properties from the API tool, updating the data model based on the adapted data model properties, generating an API based on the data model, and transmitting the API to another device, thereby providing the functionality of the legacy software via the API.

US2017/0192407 A1 discloses systems and methods for enabling generation of navigation schema for a Human Machine Interface (HMI) application based on control system models.

US 2020/125076 A1 discloses apparatus and methods for controlling a power plant system wherein energy resources are installed.

### Summary

It is an object of the invention to at least partly overcome one or more of the above-identified limitations of the prior art. In particular, it is an object to provide a method for enabling cost-efficient and easier data retrieval from a food production plant by dynamically generating an API without altering the control system of the food production plant.

It has been realized that by automatically generating an API, a higher accessibility of process data can be achieved. This may be beneficial to for instance human-machine interface (HMI) developers when they develop a monitoring system of the food processing plant.

To provide for that different types of control systems can be managed efficiently, it has been realized that a digital model, also referred to as data model, may be formed based on properties of the food production plant retrieved via the control system. To avoid a control system type dependency, the properties are transformed into data model properties based upon which the data model is built. Thus, if using a central server for hosting the data model, it is enough that a software used in the central server for transforming the properties to the data model properties are made to support the different types of control systems.

Further, it has also been realized that by combining the data model properties, which originates from the properties from the food production plant, with plant design data, that is, information related to a process design of the production plant often made by a processing engineer, the API may be built to comprise most or all information needed for an HMI developer when developing an HMI application. For instance, with the suggested approach, smart search functions can provide available alternatives during development.

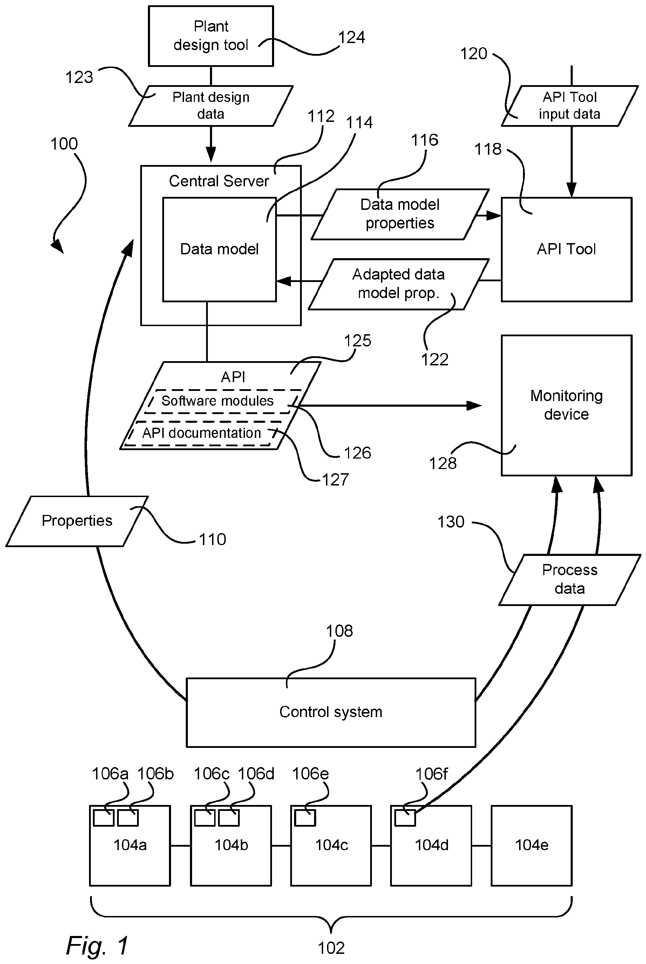

The invention is defined in the independent claims. The invention is best understood in light of the embodiment described in the context of Figure 1. While the embodiment described in the context of Figure 1 mentions some features as being optional, the claimed invention covers only the implementation that comprises all claimed features.

According to a first aspect it is provided a method for enabling access to process data of a food production plant controlled by a control system, said method comprising
receiving, by a central server, properties of the food production plant from the control system,
generating a data model based on the properties, said data model comprising data model properties, wherein the data model is control system type independent,
transmitting the data model properties to an application programming interface (API) tool,
receiving adapted data model properties from the API tool,
updating the data model based on the adapted data model properties, receiving, by the central server, plant design data from a plant design tool, generating an API based on the data model and the plant design data, and
transmitting the API to a monitoring device, thereby providing for that the monitoring device is enabled to receive the process data from the food production plant.

As explained above, by having the central server, the data model may be formed based on the properties from the control system and by doing so the control system dependency can be avoided, providing for that amount time needed for setting up a new installation can be reduced, and since less customization is needed, a risk of errors during installation can also be reduced.

By providing a possibility to adapt the data model properties, a dynamic approach is achieved. Put differently, the API may be made to fit the needs and thereby avoiding high engineering costs.

Further, by including the plant design data, information from several sources may be combined when forming the API, which provides for that a risk that the HMI developer, or other person using the API, is lacking information can be reduced.

Herein the term "process data" should be understood to include both parameter values, such as temperature, flow rate, turbulence etc. gathered by sensors in different parts of the plant, as well as configuration data, that is, how the plant or part of the plant is currently configured to operate, e.g. which tanks that are used for holding product and which tanks that are cleaned. The configuration data can be retrieved from e.g. valves, control units, such as PLCs, or the control system. In this way, it is made possible to create HMI applications in which both configuration data and/or parameter values are included and presented on a screen. It is also possible to receive user input via the HMI application that can be used for changing the parameter values and/or the configuration data.

The API may provide for that the monitoring device is configured to receive the process data directly from at least one sensor of the food production plant.

If all process data is to be sent via the control system, there is a risk that information made available via the sensors in the food production plant does not reach the HMI developer. For instance, the control system may not support switching time for a valve and by not supporting this, the information cannot reach the HMI engineer. However, if the process data may be retrieved directly from the sensors, i.e. by bypassing the control system, the HMI engineer are not restricted by limitations in the control system. To provide for that the process data can be retrieved directly from the sensors, information on the sensors may be retrieved via the plant design data and/or via the API tool.

The process data can be sensor data inaccessible to the control system.

The control system may be a supervisory control and data acquisition (SCADA) system.

The monitoring device may be a human-machine interface (HMI) device.

The data model may be control system programming language independent.

The step of generating the API based on the adapted data model properties may comprise the sub-steps of
generating source code,
compiling the source code into a binary file.

The step of generating the API based on the adapted data model properties may comprise the sub-step of
generating API documentation.

According to a second aspect it is provided a central server for enabling access to process data of a food production plant controlled by a control system, wherein the central server is communicatively connected to the food production plant via the control system, to an API tool, to a plant design tool and to a monitoring device, said central sever comprising a memory, a processor and a transceiver,
said transceiver being configured to
receive properties of the food production plant from the control system,
transmit the data model properties to the API tool,
receive adapted properties from the API tool,
receive plant design data from the plant design tool,
transmit the API to the monitoring device,
said processor and memory being configured to execute
a data model generation function configured to generate a data model based on the properties, said data model comprising data model properties, wherein the data model is control system type independent,
a data model update function configured to update the data model based on the adapted data model properties,
an API generation function configured to generate the API based on the data model and the plant design data.

The API may provide for that the monitoring device is configured to receive the process data directly from sensors in the production plant.

The process data may be sensor data inaccessible to the control system.

The control system may be a supervisory control and data acquisition (SCADA) system.

The monitoring device may be a human-machine interface (HMI) device.

According to a third aspect it is provided a food production plant comprising
a number of food production units,
a control system communicatively connected to sensors in the food production units,
a central server according to the second aspect,
an API tool configured to generate adapted data model properties based on the data model properties,
a plant design tool configured to provide plant design data, and
a monitoring device configured to receive process data from the sensors in the food production units, wherein a software of the monitoring device is configured by using the API.

According to a fourth aspect it is provided a computer program comprising instructions for implementing a method according to a first aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a schematic view of a food production plant comprising a control system, a central server and a monitoring device.
Fig. 2 is a flowchart illustrating the steps of a method for enabling access to process data of the food production plant.
Fig. 3 illustrates the central server in further detail.

### Detailed description

Fig.1 illustrates an overview of a food production plant 100 by way of example. In this example, a food production line 102 comprising a number of food production units 104a-e is provided. However, even though not illustrated, the food production plant 100 may also comprise a number of lines or a network of food production units 104a-e connected to each other via valve batteries.

The food production units 104a-e can comprise programmable logic controllers (PLCs) and a number of sensors 106a-f. As illustrated, several sensors may be provided in one and the same food production unit and there may also be food production units without sensors. In this context, the food production units should be given a broad meaning and may also include e.g. pipes, valves or packaging equipment.

The food production units 104a-e can be controlled by a control system 108 that is communicatively connected to the food production units 104a-e. Via the control system 108, properties 110 of the food production plant 100, or more specifically the food production units 104a-e, can be provided to a central server 112.

The central server 112 is herein illustrated as a part of the food production plant. The central server can however also be shared between multiple food production plants. In the case of a shared central server, information between the different food production plants can be shared.

Based on the properties 110, a data model 114 can be formed. The data model can be seen as a digital model of the food production plant 100, that is the food production units 104a-e. To provide for increased efficiency, the data model may be control system type independent, that is, software configured for creating the data model based on the properties can be made to translate different programming languages, different architecture etc into a common format. The properties can also be so called input-output (IO) properties, also referred to as parameters.

Data model properties 116, being part of the data model 114, may be transferred from the central server 112 to an application programming tool (API) tool 118. The API tool 118 may be separated from the central server 112, but it may also share the same hardware as the central server in full or in part. An advantage with the API tool 118 is that the data model properties 116 may be adapted in accordance with needs and requirements related to how an API to be developed is intended to be used. These needs and requirements may be reflected in API tool input data 120 that is input to the API tool 118. This input may be provided by a user via a user interface.

Based on the API tool input data 120, adapted data model properties 122 can be formed and transmitted back to the central server 112. However, as an alternative, the API tool input data 120 may be sent to the central server directly such that the adapted data model properties can be formed in the central server.

In addition to the adapted data model properties 122, plant design data 123 can be received by the central server 112. The plant design data 123 can be provided from a plant design tool 124, which may be a tool used by process engineers for designing the food production plant 100. The plant design data 123 may be provided before the data model properties are transmitted to the API tool, and hence the plant design data 123 may be reflected in the data model properties 116 transmitted to the API tool 118.

Using both the adapted data model properties 122 and the plant design data 123, an API 125 may be formed. The API 125 may comprise software modules 127 and API documentation 127, that is, text data describing the software modules, both being automatically generated in the central server 112.

The API 125 can be provided to a monitoring device 128 such that e.g. HMI applications can be developed in which process data 130 from the food production plant 100 is used. In addition to being an HMI device, such as a touch display, the monitoring device can be personal computer using a spreadsheet-based software, such as Microsoft Excel^{™}, in which the process data 130 is continuously being monitored.

As illustrated, the process data 130 may be provided to the monitoring device 130 via the control system or directly from one or several of the sensors 106a-f to the monitoring device. An advantage of having the option to by-pass the control system is that in case the control system 108 does not support that the process data 130, or part of the process data 130, is sent via the control system 108, this can still be possible when having the possibility to by-pass.

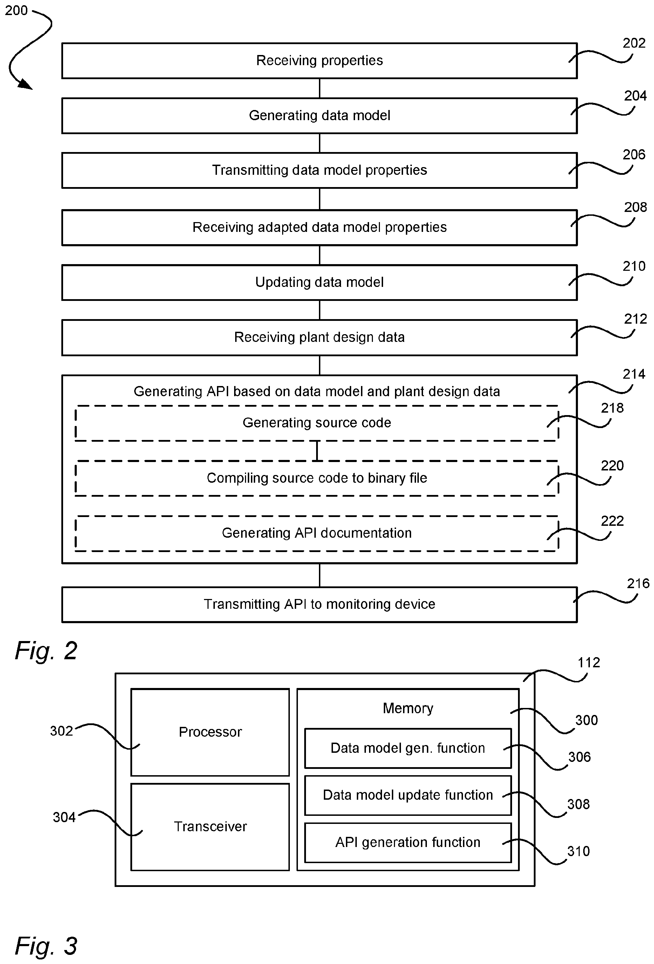

Fig. 2 is a flow chart 200 illustrating a method for enabling access to the process data 130 of the food production plant 100 controlled by a control system 108.

In a first step 202, the properties 110 of the food production plant 100 can be received.

In a second step 204, the data model 114 can be generated based on the properties 110. The data model 114 may comprise the data model properties 116 and the data model 114 may be control system type independent.

In a third step 206, the data model properties 116 can be transmitted to the API tool 118.

In a fourth step 208, the adapted data model properties 122 can be received from the API tool 118.

In a fifth step 210, the data model 114 can be updated based on the adapted data model properties 122.

In a sixth step 212, the plant design data 123 from the plant design tool 124 can be received by the central server 112.

In a seventh step 214, the API 125 can be generated based on the data model 114 and the plant design data 123.

In an eighth step 216, the API 125 can be transmitted to the monitoring device 128, thereby providing for that the monitoring device 128 is enabled to receive the process data 130 from the food production plant 100.

Optionally, the seventh step 214 may comprise a ninth step 218 in which source code is generated, and a tenth step 220 in which the source code can be compiled into a binary file.

Optionally, in an eleventh step 222, which may be a sub-step of the seventh step 214, API documentation can be generated.

Even though described in a certain order, the steps may be performed in other orders as well.

Fig. 3 illustrates the central server 112 in further detail. As illustrated, the central server 112 may comprise a memory 300, a processor 302 and a transceiver 304.

The transceiver 304 may be configured to receive the properties 110 of the food production plant 100 from the control system 108, transmit the data model properties 116 to the API tool 118, receive the adapted properties 122 from the API tool 118, receive the plant design data 123 from the plant design tool 124, and transmit the API 125 to the monitoring device 128.

The processor 302 and the memory 300 can be configured to execute a data model generation function 306 configured to generate a data model based on the properties 110, a data model update function 308 configured to update the data model 114 based on the adapted data model properties 122, an API generation function 310 configured to generate the API 125 based on the data model 114 and the plant design data 123.

From the description above follows that, although various embodiments of the invention have been described and shown, the invention is not restricted thereto, but may also be embodied in other ways within the scope of the subject-matter defined in the following claims.

## Claims

1. A method (200) for enabling access to process data (130) of a food production plant (100) controlled by a control system (108), said method comprising
receiving (202), by a central server (112), properties (110) of the food production plant (100) from the control system (108),
generating (204) a data model (114) based on the properties (110), said data model (114) comprising data model properties (116), wherein the data model (114) is control system type independent,
transmitting (206) the data model properties (116) to an application programming interface (API) tool (118),
receiving (208) adapted data model properties (122) from the API tool (118),
updating (210) the data model (114) based on the adapted data model properties (122),
receiving (212), by the central server (112), plant design data (123) from a plant design tool (124),
generating (214) an API (125) based on the data model (114) and the plant design data (123), and
transmitting (216) the API (125) to a monitoring device (128), thereby providing for that the monitoring device (128) is enabled to receive the process data (130) from the food production plant (100),
wherein the API (125) provides for that the monitoring device (128) is configured to receive the process data (130) directly from at least one sensor (106a-f) of the food production plant (100),
wherein the process data (130) is sensor data inaccessible to the control system (108).

2. The method according to any one of the preceding claims, wherein the control system (108) is a supervisory control and data acquisition (SCADA) system.

3. The method according to any one of the preceding claims, wherein the monitoring device (130) is a human-machine interface (HMI) device.

4. The method according to any one of the preceding claims, wherein the data model (114) is control system programming language independent.

5. The method according to any one of the preceding claims, wherein the step of generating (214) the API (125) based on the adapted data model properties (122) comprises the sub-steps of
generating (218) source code,
compiling (220) the source code into a binary file.

6. The method according to any one of the preceding claims, wherein the step of generating (214) the API (125) based on the adapted data model properties (122) comprises the sub-step of
generating (222) API documentation (127).

7. A central server (112) for enabling access to process data (130) of a food production plant (100) controlled by a control system (108), wherein the central server (112) is communicatively connected to the food production plant (100) via the control system (108), to an API tool (118), to a plant design tool (124) and to a monitoring device (128), said central sever (112) comprising a memory (300), a processor (302) and a transceiver (304),
said transceiver (304) being configured to
receive properties (110) of the food production plant (100) from the control system (108),
transmit the data model properties (116) to the API tool (118),
receive adapted properties from the API tool (118),
receive plant design data (123) from the plant design tool (124),
transmit the API (125) to the monitoring device (128),
said processor (302) and memory (300) being configured to execute
a data model generation function (306) configured to generate a data model based on the properties (110), said data model (114) comprising data model properties (116), wherein the data model (114) is control system type independent,
a data model update function (308) configured to update the data model (114) based on the adapted data model properties (122),
an API generation function (310) configured to generate the API (125) based on the data model (114) and the plant design data (123),
wherein the API (125) provides for that the monitoring device (128) is configured to receive the process data (130) directly from sensors (106a-f) in the food production plant (100),
wherein the process data (130) is sensor data inaccessible to the control system (108).

8. The central server according to claim 7 , wherein the control system (108) is a supervisory control and data acquisition (SCADA) system.

9. The central server according to any one of the claims 7 to 8, wherein the monitoring device (128) is a human-machine interface (HMI) device.

10. A food production plant (100) comprising
a number of food production units (104a-e),
a control system (108) communicatively connected to sensors (106a-f) in the food production units (104a-e),
a central server (112) according to any one of the claims 7 to 9,
an API tool (118) configured to generate adapted data model properties (122) based on the data model properties (116),
a plant design tool (124) configured to provide plant design data (123), and
a monitoring device (128) configured to receive process data (130) from the sensors (106a-f) in the food production units (104a-e), wherein a software of the monitoring device (130) is configured by using the API (125).

11. A computer program comprising instructions for implementing a method of any one of the claims 1 to 6.

## Patentansprüche

1. Verfahren (200) zum Ermöglichen des Zugriffs auf Prozessdaten (130) einer von einem Steuersystem (108) gesteuerten Lebensmittelproduktionsanlage (100), wobei das Verfahren Folgendes umfasst:
Empfangen (202), durch einen zentralen Server (112), von Eigenschaften (110) der Lebensmittelproduktionsanlage (100) vom Steuersystem (108),
Erzeugen (204) eines Datenmodells (114) auf der Grundlage der Eigenschaften (110), wobei das Datenmodell (114) Datenmodelleigenschaften (116) umfasst, wobei das Datenmodell (114) vom Steuersystemtyp unabhängig ist,
Übertragen (206) der Datenmodelleigenschaften (116) an ein Tool der Anwendungsprogrammierschnittstelle (API) (118) ,
Empfangen (208) angepasster Datenmodelleigenschaften (122) vom API-Tool (118),
Aktualisieren (210) des Datenmodells (114) auf der Grundlage der angepassten Datenmodelleigenschaften (122),
Empfangen (212), durch den zentralen Server (112), von Anlagenplanungsdaten (123) von einem Anlagenplanungs-Tool (124),
Erzeugen (214) einer API (125) auf der Grundlage des Datenmodells (114) und der Anlagenplanungsdaten (123), und
Übertragen (216) der API (125) an eine Überwachungsvorrichtung (128), wodurch dafür gesorgt wird, dass die Überwachungsvorrichtung (128) in der Lage ist, die Prozessdaten (130) von der Lebensmittelproduktionsanlage (100) zu empfangen,
wobei die API (125) vorsieht, dass die Überwachungsvorrichtung (128) so ausgebildet ist, dass sie die Prozessdaten (130) direkt von mindestens einem Sensor (106a-f) der Lebensmittelproduktionsanlage (100) empfängt,
wobei die Prozessdaten (130) Sensordaten sind, auf die das Steuersystem (108) nicht zugreifen kann.

2. Verfahren nach einem der vorhergehenden Ansprüche, wobei das Steuersystem (108) ein System zur überwachenden Steuerung und Datenerfassung (SCADA) ist.

3. Verfahren nach einem der vorhergehenden Ansprüche, wobei die Überwachungsvorrichtung (130) eine Mensch-Maschine-Schnittstelle-(HMI)-Vorrichtung ist.

4. Verfahren nach einem der vorhergehenden Ansprüche, wobei das Datenmodell (114) unabhängig von der Programmiersprache des Steuersystems ist.

5. Verfahren nach einem der vorhergehenden Ansprüche, wobei der Schritt des Erzeugens (214) der API (125) auf der Grundlage der angepassten Datenmodelleigenschaften (122) die folgenden Teilschritte umfasst:
Generieren von (218) Quellcode,
Kompilieren (220) des Quellcodes in eine Binärdatei.

6. Verfahren nach einem der vorhergehenden Ansprüche, wobei der Schritt des Erzeugens (214) der API (125) auf der Grundlage der angepassten Datenmodelleigenschaften (122) den Teilschritt des Erzeugens (222) der API-Dokumentation (127) umfasst.

7. Zentraler Server (112) zur Ermöglichung des Zugriffs auf Prozessdaten (130) einer von einem Steuersystem (108) gesteuerten Lebensmittelproduktionsanlage (100), wobei der zentrale Server (112) über das Steuersystem (108) mit der Lebensmittelproduktionsanlage (100), mit einem API-Tool (118), mit einem Anlagenplanungs-Tool (124) und mit einer Überwachungsvorrichtung (128) kommunikativ verbunden ist, wobei der zentrale Server (112) einen Speicher (300), einen Prozessor (302) und einen Transceiver (304) umfasst,
wobei der Transceiver (304) für Folgendes ausgebildet ist:
Empfangen von Eigenschaften (110) der Lebensmittelproduktionsanlage (100) vom Steuersystem (108),
Übertragen der Datenmodelleigenschaften (116) an das API-Tool (118),
Empfangen der angepassten Eigenschaften vom API-Tool (118),
Empfangen von Anlagenplanungsdaten (123) von dem Anlagenplanungs-Tool (124),
Übertragen der API (125) an die Überwachungsvorrichtung (128),
wobei der Prozessor (302) und der Speicher (300) dazu ausgebildet sind, Folgendes auszuführen:
eine Datenmodell-Erzeugungsfunktion (306), die so ausgebildet ist, dass sie ein Datenmodell auf der Grundlage der Eigenschaften (110) erzeugt, wobei das Datenmodell (114) Datenmodelleigenschaften (116) umfasst, wobei das Datenmodell (114) vom Steuersystemtyp unabhängig ist,
eine Datenmodell-Aktualisierungsfunktion (308), die so ausgebildet ist, dass sie das Datenmodell (114) basierend auf den angepassten Datenmodelleigenschaften (122) aktualisiert,
eine API-Erzeugungsfunktion (310), die so ausgebildet ist, dass sie die API (125) auf der Grundlage des Datenmodells (114) und der Anlagenplanungsdaten (123) erzeugt,
wobei die API (125) vorsieht, dass die Überwachungsvorrichtung (128) so ausgebildet ist, dass sie die Prozessdaten (130) direkt von Sensoren (106a-f) in der Lebensmittelproduktionsanlage (100) empfängt,
wobei die Prozessdaten (130) Sensordaten sind, auf die das Steuersystem (108) nicht zugreifen kann.

8. Zentraler Server nach Anspruch 7, wobei das Steuersystem (108) ein Überwachungs-, Steuerungs- und Datenerfassungssystem (SCADA) ist.

9. Zentraler Server nach einem der Ansprüche 7 bis 8, wobei die Überwachungsvorrichtung (128) eine Vorrichtung mit Mensch-Maschine-Schnittstelle (HMI) ist.

10. Lebensmittelproduktionsanlage (100), die Folgendes umfasst:
eine Reihe von Lebensmittelproduktionseinheiten (104a-e),
ein Steuersystem (108), das kommunikativ mit Sensoren (106a-f) in den Lebensmittelproduktionseinheiten (104a-e) verbunden ist,
einen zentralen Server (112) nach einem der Ansprüche 7 bis 9,
ein API-Tool (118), das so konfiguriert ist, dass es angepasste Datenmodelleigenschaften (122) auf der Grundlage der Datenmodelleigenschaften (116) erzeugt,
ein Anlagenplanungs-Tool (124), das so ausgebildet ist, dass es Anlagenplanungsdaten (123) bereitstellt, und
eine Überwachungsvorrichtung (128), die so ausgebildet ist, dass sie Prozessdaten (130) von den Sensoren (106a-f) in den Lebensmittelproduktionseinheiten (104a-e) empfängt, wobei eine Software der Überwachungsvorrichtung (130) unter Verwendung der API (125) konfiguriert wird.

11. Computerprogramm mit Anweisungen zur Durchführung eines Verfahrens nach einem der Ansprüche 1 bis 6.

## Revendications

1. Procédé (200) permettant l'accès à des données de processus (130) d'une usine de production alimentaire (100) commandée par un système de commande (108), ledit procédé comprenant :
la réception (202), par un serveur central (112), en provenance du système de commande (108), de propriétés (110) de l'usine de production alimentaire (100),
la génération (204) d'un modèle de données (114) en fonction des propriétés (110), ledit modèle de données (114) comprenant des propriétés de modèle de données (116), dans lequel le modèle de données (114) est indépendant du type de système de commande,
la transmission (206) des propriétés de modèle de données (116) à un outil d'interface de programmation d'application (API) (118),
la réception (208) de propriétés de modèle de données adaptées (122) en provenance de l'outil d'API (118),
la mise à jour (210) du modèle de données (114) en fonction des propriétés de modèle de données adaptées (122),
la réception (212), par le serveur central (112), de données de conception d'installation (123) en provenance d'un outil de conception d'installation (124),
la génération (214) d'une API (125) en fonction du modèle de données (114) et des données de conception d'installation (123), et
la transmission (216) de l'API (125) à un dispositif de surveillance (128), permettant ainsi au dispositif de surveillance (128) de recevoir les données de processus (130) en provenance de l'usine de production alimentaire (100),
dans lequel l'API (125) permet au dispositif de surveillance (128) d'être configuré pour recevoir les données de processus (130) directement à partir d'au moins un capteur (106a-f) de l'usine de production alimentaire (100),
dans lequel les données de procédé (130) sont des données de capteur inaccessibles au système de commande (108) .

2. Procédé selon l'une quelconque des revendications précédentes, dans lequel le système de commande (108) est un système de télésurveillance et acquisition de données (SCADA).

3. Procédé selon l'une quelconque des revendications précédentes, dans lequel le dispositif de surveillance (130) est un dispositif d'interface homme-machine (HMI).

4. Procédé selon l'une quelconque des revendications précédentes, dans lequel le modèle de données (114) est indépendant du langage de programmation du système de commande.

5. Procédé selon l'une quelconque des revendications précédentes, dans lequel l'étape de génération (214) de l'API (125) en fonction des propriétés de modèle de données adaptées (122) comprend les sous-étapes de
génération (218) d'un code source,
compilation (220) du code source en un fichier binaire.

6. Procédé selon l'une quelconque des revendications précédentes, dans lequel l'étape de génération (214) de l'API (125) en fonction des propriétés de modèle de données adaptées (122) comprend la sous-étape de
génération (222) d'une documentation d'API (127).

7. Serveur central (112) permettant l'accès aux données de processus (130) d'une usine de production alimentaire (100) commandée par un système de commande (108), dans lequel le serveur central (112) est connecté de manière communicative à l'usine de production alimentaire (100) via le système de commande (108), à un outil d'API (118), à un outil de conception d'usine (124) et à un dispositif de surveillance (128), ledit serveur central (112) comprenant une mémoire (300), un processeur (302) et un émetteur-récepteur (304),
ledit émetteur-récepteur (304) étant configuré pour
recevoir des propriétés (110) de l'usine de production alimentaire (100) en provenance du système de commande (108),
transmettre les propriétés de modèle de données (116) à l'outil d'API (118),
recevoir des propriétés adaptées de l'outil d'API (118),
recevoir des données de conception d'usine (123) en provenance de l'outil de conception d'usine (124),
transmettre l'API (125) au dispositif de surveillance (128),
lesdits processeur (302) et mémoire (300) étant configurés pour exécuter
une fonction de génération de modèle de données (306) configurée pour générer un modèle de données en fonction des propriétés (110), ledit modèle de données (114) comprenant des propriétés de modèle de données (116), dans lequel le modèle de données (114) est indépendant du type de système de commande,
une fonction de mise à jour de modèle de données (308) configurée pour mettre à jour le modèle de données (114) en fonction des propriétés de modèle de données adaptées (122),
une fonction de génération d'API (310) configurée pour générer l'API (125) en fonction du modèle de données (114) et des données de conception d'usine (123),
dans lequel l'API (125) permet au dispositif de surveillance (128) d'être configuré pour recevoir les données de processus (130) directement à partir de capteurs (106a-f) dans l'usine de production alimentaire (100),
dans lequel les données de processus (130) sont des données de capteur inaccessibles au système de commande (108) .

8. Serveur central selon la revendication 7, dans lequel le système de commande (108) est un système de télésurveillance et acquisition de données (SCADA).

9. Serveur central selon l'une quelconque des revendications 7 à 8, dans lequel le dispositif de surveillance (128) est un dispositif d'interface homme-machine (HMI).

10. Usine de production alimentaire (100) comprenant un nombre d'unités de production alimentaire (104a-e),
un système de commande (108) connecté de manière communicative à des capteurs (106a-f) dans les unités de production alimentaire (104a-e),
un serveur central (112) selon l'une quelconque des revendications 7 à 9,
un outil d'API (118) configuré pour générer des propriétés de modèle de données adaptées (122) en fonction des propriétés de modèle de données (116),
un outil de conception d'usine (124) configuré pour fournir des données de conception d'usine (123), et
un dispositif de surveillance (128) configuré pour recevoir des données de processus (130) à partir des capteurs (106a-f) dans les unités de production alimentaire (104a-e), dans lequel un logiciel du dispositif de surveillance (130) est configuré à l'aide de l'API (125).

11. Programme d'ordinateur comprenant des instructions pour l'implémentation d'un procédé selon l'une quelconque des revendications 1 à 6.
